# EUROPEAN PATENT APPLICATION

(11) **EP 1 724 723 A1**
(43) Date of publication of application: **22.11.2006**
(21) Application number: 06445020.8
(22) Date of filing: 05.05.2006
(51) Int. Cl.: G06Q 40/00

(54) **Consolidated accounting**

(30) Priority: 09.05.2005 US 124384
(71) Applicant: Nesilop AB, SE-167 71 Bromma (SE)
(72) Inventor: Leffler, Frederik c/o Grünberger Advokatbyra, SE-103 90 Stockholm (SE)
(74) Representative: Fritzon, Rolf

(57) **Abstract**

The invention relates to a system for performing consolidated accounting or reporting over a period of time in a group of companies comprising at least one parent company and one subsidiary. The system comprises: a data storage device for storing accounting entries relating to the companies in the group of companies; a data presentation and calculation device in communication with the data storage device, wherein the data presentation and calculation is provided to retrieve and store data to and from the data storage device, to present data to a user of the system, and to perform calculations based on the data stored in the data storage device. The system is characterised in that: the data presentation and calculation comprises flow matrices wherein each flow matrix comprises: a first row defining a first balance sheet account; at least a second row defining at least a second balance sheet account; a first column defining an opening balance for each of the at least one balance sheet account; a second column defining closing balance for each of the at least one balance sheet account and at least one further column defining a change in each of the at least one balance sheet account.

## Description

### TECHNICAL FIELD

The present invention relates to a method, apparatus and system for setting up a statement of accounts and more particular to a method, apparatus and system for setting up a statement of consolidated accounts for a group of companies.

### BACKGROUND TO APPLICATION

Traditional systems for consolidated accounting are a development of systems for bookkeeping in individual companies. This means that the consolidated accounts are built up systematically on the basis of the accounts of companies which report individually. The procedure is usually as follows:
1) Each individual company prepares a balance sheet and profit and loss account and reports other information to be included in the consolidated accounts.
2) Where applicable, these accounts are adapted to the parent company's accounting principles, if that has not already been done.
3) The reporting company's balance sheet and profit and loss account and other financial information are translated into the parent company's currency. Exchange rate differences which thereby arise are taken directly to equity in the respective companies.
4) Intra-group eliminations and adjustments are recorded in the parent company's currency. Changes in the elimination amount resulting from changes in exchange rates for the translation of the reporting company's balance sheet and profit and loss account are taken directly to equity in the consolidated accounts.
5) The consolidated balance sheet and profit and loss account consist of the sum of the translated balance sheets and profit and loss accounts of the reporting companies after intra-group eliminations and adjustments and exchange rate differences at various levels within the group.
6) After that, the consolidated cash flow analysis is prepared which, among other things, requires further currency translations and eliminations.

The method according to the prior art gives rise to at least the following problems:
1) It is difficult to check that there is continuity between the opening balances of one accounting period and the closing balances of the previous period.
2) The recording of intra-group eliminations and adjustments after the translation of balance sheets and profit and loss accounts in foreign currency is cumbersome and associated with several sources of errors.
3) Differences between the consolidated balance sheet and profit and loss account are difficult and often impossible to attribute to individual reporting units.
4) There are major difficulties in preparing the cash flow analysis. In particular there are problems with eliminating exchange rate differences in a proper manner, as well as, after currency translation, with handling liquidity-related changes in the group's assets and liabilities. Differences therefore arise not only in the cash flow analysis, but also between the cash flow analysis, the balance sheet account and the profit and loss account, which are often impossible to explain.
5) Analyses of changes in the group structure and analyses of the composition of the group's assets, liabilities, income and expenses are difficult to conduct and associated with several sources of errors.

### SUMMARY OF THE INVENTION

It is a main object of the present invention to provide such apparatus and method that at least alleviate the above problems.

It is in this respect a particular object of the invention to provide such apparatus and method that integrates the consolidated cash flow analysis with the profit and loss account and balance sheet, so differences between these various accounts cannot arise.

It is in this respect a particular object of the invention to provide such apparatus and method that automatically ensures that continuity in balance sheets and cash flow analyses is maintained over different accounting periods.

It is still a further object of the invention to provide such apparatus and method that makes it possible to directly attribute any differences in the accounts to its origin in a subsidiary.

It is still a further object of one aspect of the invention to provide automatic currency translation that records all exchange rate differences in the profit and loss account, the balance sheet and the cash flow analysis and checks that these balance to zero.

It is still a further object of one aspect of the invention to do all intra-group eliminations and adjustments in local currency, whereby the invention, during the currency translation, automatically handles exchange rate differences arising as a result of said eliminations and adjustments.

It is still a further object of one aspect of the invention to provide built-in checks and automatically eliminate exchange rate differences from the cash flow analysis so that, when said built-in checks are carried out, differences cannot arise, or alarms are generated to alert a user of present differences.

It is still a further object of the invention to provide such apparatus and method that handles the liquidity flows resulting from changes in the reporting company's assets and liabilities.

It is still a further object of the invention to provide such apparatus and method that provide means for attributing all differences between the consolidated balance sheet and profit and loss account and in the cash flow analysis to the reporting company and accounting entry so that it can be accounted for and corrected.

It is still a further object of the invention to provide such apparatus and method that makes it easy to carry out analyses of changes in the group structure and analyses of the composition of the group's assets, liabilities, income and expenses.

These objects among others are, according to a first aspect of the present invention, attained by a method for performing consolidated accounting for a specific period in a group of companies comprising at least one parent company and at least one subsidiary. The method comprises the steps of: - providing said parent company with at least one flow matrix relating to a specific group of accounting entries from each of said at least one subsidiary, and - adding said flow matrices received from said subsidiaries to perform said consolidated accounting for said specific group of accounting entries.

Further aspects and variants of the present invention are disclosed in the appended claims.

The flow matrices comprises: - a first row defining a first balance sheet account, - at least a second row defining at least a second balance sheet account, - a first column defining an opening balance for each of said at least first and second balance sheet account, - a second column defining closing balance for each of said at least first and second balance sheet account and - at least one further column defining a change in each of said at least first and second balance sheet account.

In more detail the system operates using flow matrices. Each flow matrix is, according to one aspect of the invention, a complete accounting report with opening and closing balances, balance sheet, profit and loss account and cash flow analysis. The consolidated accounts are the sum of these flow matrices. There are no accounting entries in the consolidated accounts which cannot be attributed to specific flow matrices.

For each reporting unit separate flow matrices are set up for each group of accounting entries which are to be recorded in the consolidated accounts. The user himself decides into what groups the accounting entries shall be divided.

Examples of such divisions include:
- the changes for the period in the balance sheet accounts and income and expense accounts of the individual companies,
- elimination of untaxed reserves,
- elimination of minority interests,
- elimination in the parent company of shares in subsidiaries,
- elimination of goodwill in subsidiaries,
- elimination of intercompany profits,
- elimination of acquired equity,
- elimination of intercompany balances, and
- information items.

Each division defines a specific type of flow matrix.

For each reporting unit flow matrices in local currency are prepared. Each flow matrix is attributed to a specific reporting unit and a specific accounting period and is recorded by type of group in accordance with the above.

Each individual flow matrix is a complete set of accounts for the reporting unit of the group of accounting entries to which the matrix relates. The flow matrix thus contains all the accounting entries which are required for the matrix's profit and loss account and balance sheet, for its cash flow analysis, for the breakdown of shareholders' equity, reconciliations and controls.

According to one aspect of the invention each flow matrix is rendered in local currency and translated, i.e. noted in a different currency taking into account an exchange rate relating the local currency to the translated currency, into the currency used by the parent company. With the automatic currency translation, the system records exchange rate differences on the respective flow matrix, so each flow matrix has its own exchange rate differences separate from those of other flow matrices.

The flow matrix's balance sheet accounts contain opening and closing balances in respective columns and the changes for the year between these. The changes for the year are shown in the flow matrices in various explanatory columns. Different accounts are handled by rows in the flow matrix. Rows in the flow matrix may also be used for performing calculations or operations based on the figures in the specific flow matrix or present results from particular calculations or operations. The user can himself determine how the division shall take place between various types of columns as will be shown below.

The flow matrix's profit and loss accounts can also be divided into various explanatory columns as will be shown below.

In the flow matrices all net changes in the balance sheet accounts which affect shareholders' equity are also booked against the accounts for shareholders' equity. In other words the net profit for the accounting period is also booked against the accounts for shareholders' equity.The balance sheets therefore always balance to zero. All changes in the profit and loss accounts are also booked net in shareholders' equity even those which do not affect the profit are booked, such as new share issues. The profit and loss accounts thus become a complete breakdown, or specification, of the change in shareholders' equity.

According to one aspect of the invention the system automatically checks that opening and closing balances as well as the sum of all explanatory columns balance to zero per currency, and that opening balances plus the changes for the year agree with the closing balances per balance sheet account. The system also checks that the change in shareholders' equity in the balance sheet accounts for the year is equal to the sum of all bookings in the profit and loss account per currency. These checks ensure that no unexplained differences occur.

According to one aspect of the invention there is, for each flow matrix, an automatic transfer of the previous year's closing balances to the current year's opening balances, while all other items are set at zero, at the change of the accounting period. This ensures continuity in the accounting. According to one variant of the invention the opening balances can not be manually edited to ensure integrity.

According to one aspect of the present invention each flow matrix in foreign currency can be translated. The exchange rate differences are automatically booked in the flow matrix per balance sheet account in a separate explanatory column. The exchange rate differences always add up to zero.

According to one aspect of the present invention each or a combination of flow matrices can also be listed as an analysis of the cash flow in local and translated currency. In translated flow matrices the exchange rate differences balance to zero and are automatically eliminated in the cash flow analysis.

For each account in the consolidated accounts the balance in the form of a general ledger can be broken down by various types of flow matrices. It is therefore easy to analyse how various flow matrices have affected the consolidated profit and loss account, balance sheet and cash flow. It is also very easy to analyse how changes in the consolidated group affect the consolidated accounts. As an example, it is easy to analyse how acquisition of a new company to the group affect the consolidated account by simply setting up a flow matrix for the company to be acquired and incorporating the flow matrix into the consolidated accounts.

One advantage according to the present invention is that a full integration of the balance sheet, profit and loss account and cash flow analysis in each flow matrix and thereby in the whole group is achieved.

A further advantage according to the present invention is that it ensures that there is continuity in the balance sheet, profit and loss account and cash flow analysis in each flow matrix and thereby in the whole group.

A further advantage according to the present invention is that automatic control functions are provided which guarantee that each flow matrix constitutes a proper set of accounts.

A further advantage according to the present invention is that the profit and loss account describes the whole change in the flow matrix's shareholders' equity.

A further advantage according to the present invention is that the consolidated balance sheet, profit and loss account and cash flow analysis consist of the sum of the flow matrices of the reporting units.

A further advantage according to the present invention is that in the translated cash flow analysis the exchange rate differences add up to zero and are thus eliminated from the accounts.

According to one aspect of the invention the system and method for consolidated accounting contains the following parts: flow matrices, reconciliations, controls, currency translations, balance sheet, profit and loss account and cash flow analysis, and analyses.

According to different aspects of the invention flow matrices are characterised in that:
- All accounting entries which are included in the consolidated accounts are recorded through flow matrices in local currency.
- For each group of accounting entries the flow matrices comprise a complete balance sheet and profit and loss account, a funds statement and a specification of change in shareholders' equity, investments etc.
- The currency of each flow matrix can be translated and all calculated exchange rate differences are local to the flow matrix. Translation differences at the company and therefore on consolidated level cannot arise.
- The accounts in the flow matrices' profit and loss accounts can be divided into various types of explanatory column.
- All accounting entries both on the balance sheet and in the profit and loss account which affect shareholders' equity are booked net against the accounts for shareholders' equity per currency,
- The closing balances of the flow matrices are transferred automatically as the opening balances of the flow matrices of the next accounting period.

According to different aspects of the invention reconciliations and checks are provided that automatically for each flow matrix checks that:
- the sum of all balance sheet items in all columns which are to be translated at the same exchange rate balance to zero, i.e. each column having a different exchange rate is treated separately;
- the change in shareholders' equity according to the balance sheet agrees with the sum of income and expense items in the profit and loss account, which is translated at the same exchange rate.
- for each balance sheet account - both before and after currency translation - the closing balance is matched by the opening balance plus the changes for the period;
- no income or expense account is booked in the columns for opening or closing balances, or in the column for exchange rate differences

According to different aspects of the invention currency translations are characterised in that:
- All bookings are performed in local currency.
- Each flow matrix in foreign currency can be automatically translated to the parent company's currency and be listed as cash flow analysis, balance sheets and profit and loss accounts showing both amounts in local currency and currency translated.
- When translating currencies, the system automatically books the exchange rate difference in a separate explanatory column on the respective flow matrix for each balance sheet account.
- The exchange rates at which balance sheet accounts and income and expense accounts are to be translated is determined by linking the various columns of the flow matrices to company and currency registers, or tables, holding information about each company and currency. This linking is preferable performed per flow matrix type.

According to different aspects of the present invention cash flow analysis and reconciliation are characterised in that:
- The flow matrices can be listed as cash flow analyses by linking cells in the flow matric to various groupings in cash flow analysis.
- The exchange rate differences for each flow matrix balance to zero in the listing of the cash flow analysis.

According to different aspects of the present invention analyses is characterised in that:
- For each account in the consolidated accounts the balance in the form of a general ledger can be broken down by the flow matrices which are included in the balance.
- By excluding certain matrices or certain groups of matrices when adding them together to produce the consolidated accounts, the effects of changes in the consolidated group can be simulated. Also changes in the consolidated cash flow analyses can be analysed accordingly.

Further characteristics of the invention and advantages thereof will be evident from the following detailed description of embodiments of the invention.

### BRIEF DESCRIPTION OF THE DRAWINGS

The present invention will become more fully understood from the detailed description of embodiments of the present invention given herein below and the accompanying Figs. 1 to 28, which are given by way of illustration only, and thus are not limitative of the present invention.
Figure 1 is a flow matrix according to one variant of the present invention.
Figure 2 is a table relating different columns in the flow matrix in figure 1 to exchange rate types.
Figure 3 is a table relating exchange rates for different companies in the group for which consolidated accounting is to be performed to the different exchange rate types in figure 2.
Figure 4 is a flow matrix according to one variant of the present invention disclosing an exchange rate difference column.
Figures 5 and 6 are flow matrices according to one variant of the present invention disclosing incorporation of new issues.
Figure 7 is a cash flow analysis according to one variant of the present invention for the flow matrix disclosed in figure 6.
Figures 8 and 9 are a flow matrix and a corresponding cash flow analysis according to one variant of the present invention.
Figures 10 and 11 are a flow matrix and a corresponding cash flow analysis according to one variant of the present invention.
Figures 12 and 13 are a flow matrix and a corresponding cash flow analysis for elimination of untaxed reserves.
Figures 14 and 15 are generic listings of a balance sheet according to one aspect of the invention wherein two flow matrices are included.
Figures 16 and 17 are a flow matrix and a corresponding cash flow analysis disclosing elimination of minority interests.
Figures 18 and 19 are two flow matrices according to one variant of the present invention disclosing the use of sub-accounts.
Figure 20 is a generic listing of a balance sheet according to one variant of the invention including different flow matrices from a parent company and a subsidiary.
Figures 21 and 22 are two tables according to one variant of the invention relating groups to group types.
Figure 23 and 24 disclose how cells in flow matrices are related to groups in table 21 and 22 according to one variant of the invention.
Figure 25 is a table for storing the relation between cells and groups disclosed in figures 23 and 24 according to one variant of the invention.
Figures 26 and 27 are a balance sheet account and a profit and loss account in separate views together forming a flow matrix according to one variant of the invention.
Figure 28 is a cash flow analysis of the flow matrix in figures 26 and 27.
Figure 29 is a table in a database according to one aspect of the present invention representing flow matrices.
Figure 30 is a computer suitable for executing software for performing the methods according to the invention, or for hosting the whole or parts of the system according to the invention.
Figure 31 is a flow matrix according to one aspect of the present invention wherein the profit and loss account is included as extra explanatory columns incorporating a change in non-restricted equity.

### DETAILED DESCRIPTION OF DIFFERENT ASPECTS OF THE INVENTION

In the following description, for purposes of explanation and not limitation, specific details are set forth, such as particular techniques and applications in order to provide a thorough understanding of the present invention. However, it will be apparent to one skilled in the art that the present invention may be practiced in other embodiments that depart from these specific details. In other instances, detailed descriptions of well-known methods and apparatuses are omitted so as not to obscure the description of the present invention with unnecessary details.

The flow matrix covers the flow from opening to closing balances.

The invention works with four different types of account:
**EK** = Equity accounts
**B** = Other balance sheet accounts
**R** = Income or expense accounts
**I** = Information accounts

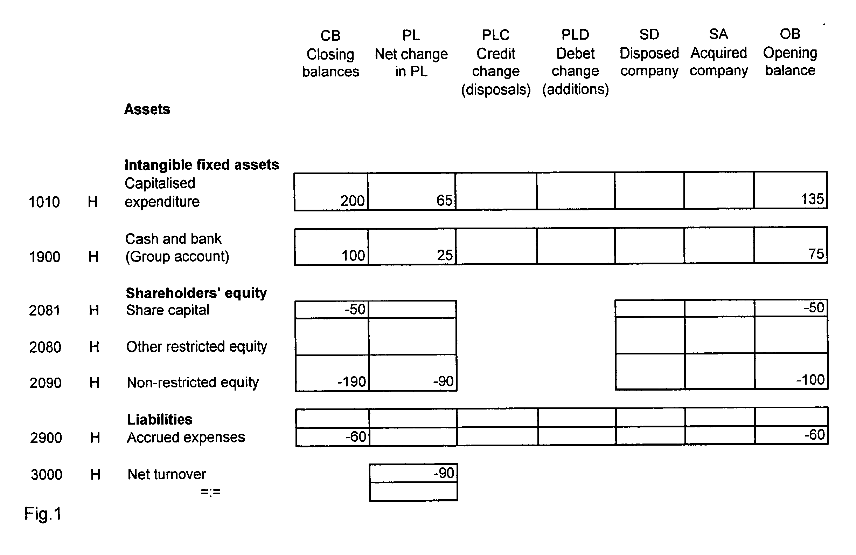

A flow matrix for the reporting of an individual company's balance sheet accounts and income and expense accounts is disclosed in figure 1.

The opening balances (the OB column) are made up of the previous year's closing balances (CB column) and are transferred automatically by the invention at the change of the accounting period. The accounts for the period are reported by recording the period's closing balances in the CB column while the differences between OB and CB are explained in the various explanatory columns. The income and expense items can if necessary be divided into different explanatory columns.

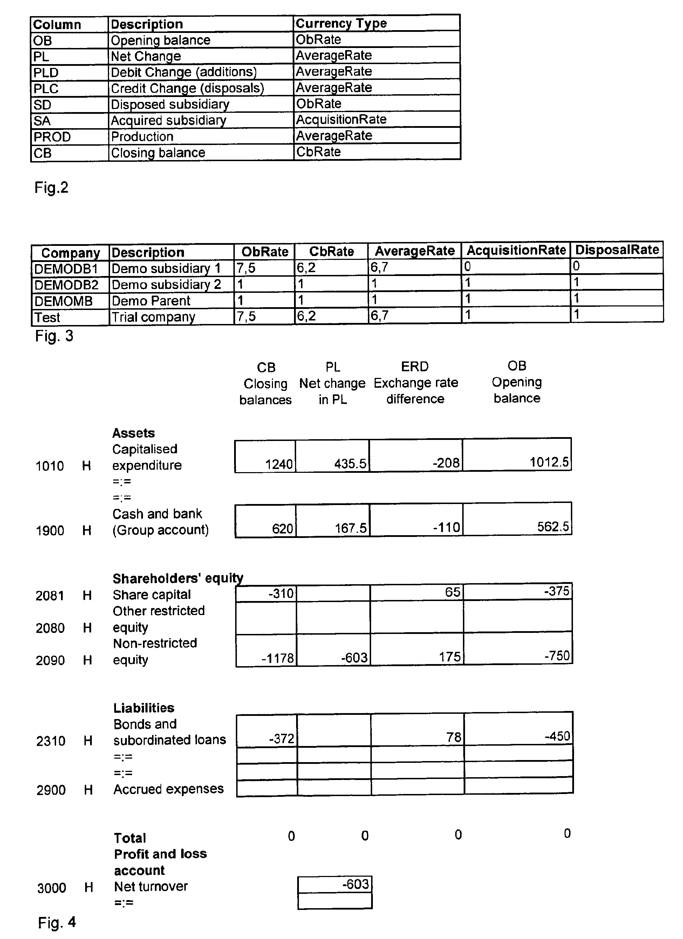

The various explanatory columns can be linked to various exchange rates through a special record as disclosed in figure 2.

Each flow matrix is prepared in local currency.

For each individual flow matrix the invention checks that:
A) for each balance sheet account the closing balance is matched by the opening balance plus changes;
B) the total of all balance sheet items in all columns which shall be translated at the same exchange rate balance to zero;
C) no income or expense account is booked in the columns for opening or closing balances, or in the column for exchange rate differences;
D) the change in shareholders' equity according to the balance sheet agrees with the total of income and expense items in the profit and loss account which are translated at the same exchange rate.

When these checks in local currency do not give rise to any differences, currency translation takes place. The checks can be included in software implementing the invention and be automatically executed for instance upon entering specific data or when specific criteria are met, or may be activated by the user by means of software push buttons as is well known to the man skilled in the art.

The OB column is usually translated at the ObRate and the CB column at the CbRate. The other columns are usually translated at the AverageRate. Currency translation is then done in accordance with the current rate method. If necessary, different exchange rates can be set for the various columns, or the number of exchange rates can be increased by increasing the number of columns in figure 2.

In order to be able to translate the currencies of the flow matrices of different reporting units for different periods according to different exchange rates, the numerical value of the corresponding exchange rates per reporting unit and period are recorded in the company register as is disclosed in figure 3.

When translating currencies the invention automatically calculates the exchange rate difference for each balance sheet account. The difference between the translated values for opening balances and changes and translated closing balances is automatically booked as an exchange rate difference for each balance sheet account in the ERD column shown in figure 4. In the translated flow matrix therefore the opening balance plus changes plus exchange rate difference corresponds to the closing balance. When this check shows that there are no differences, the sum of all exchange rate differences will always balance to zero.

Figure 4 disclose the flow matrix in our example after the currency translation including the balance sheet account and profit and loss account.

In the columns which are translated at the same exchange rate, in this example the PL column which is translated at the AverageRate, the change in shareholders' equity on the balance sheet is identical to the change in shareholders' equity in the profit and loss account.

Thus with this method the profit and loss account is a complete explanation of the whole change in share capital between OB and CB. The profit and loss account even includes the change in restricted shareholders' equity. However, the division of shareholders' equity into non-restricted and restricted etc. is shown only on the balance sheet.

In this expanded profit and loss account, the profit for the year is only a sub-total as below.

| | |
|---|---|
| **Profit for the year** | **xxxx** |
| Dividends | yyyy |
| New issues | zzzz |
| **Total change in shareholders' equity** | **wwww** |

The profit and loss account above shows a new issue of 100 which increases the restricted shareholders' equity as follows:

| | Local | Translated |
|---|---|---|
| **Profit for the year** | 90 | **603** |
| New issue | 100 | **670** |
| **Total change in shareholders' equity** | | **1273** |

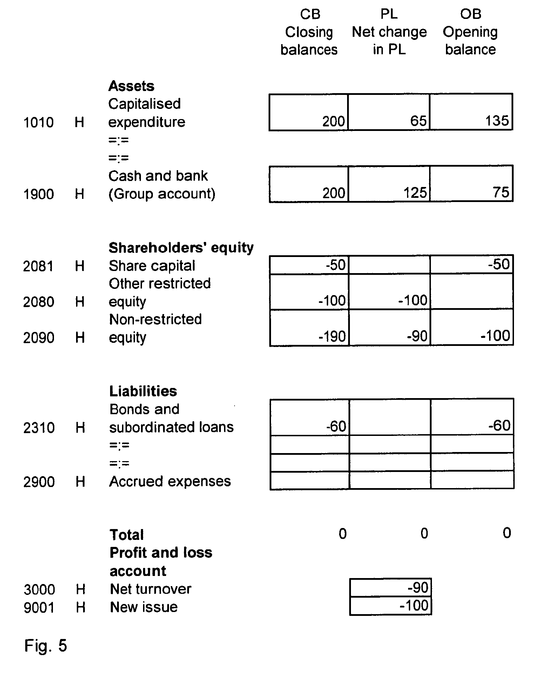

In this case the new issue is translated at the AverageRate like other income and expense accounts. Before the currency translation the flow matrix looks like depicted in figure 5. Note that the booking is done in local currency.

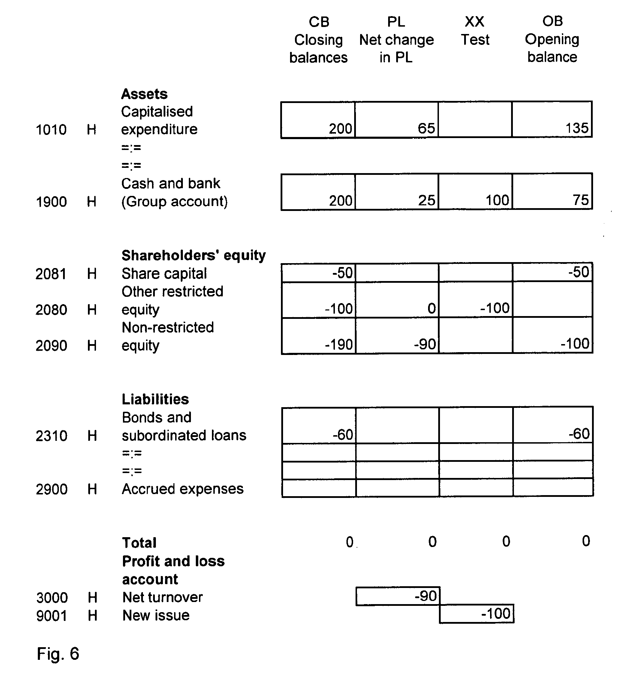

On the balance sheet one can see that the new issue has increased restricted shareholders' equity. If one want this entry to be translated at the same exchange rate as, for example, the OB column, you must link a column, here XX, to the OB exchange rate and enter the amount in this column as shown in figure 6.

The change in shareholders' equity on the balance sheet must be translated at the same exchange rate as the corresponding income and expense items in the profit and loss account, i.e. entered in columns which are translated at the same exchange rate. Otherwise there will be differences between the balance sheet and profit and loss account due to the currency translation.

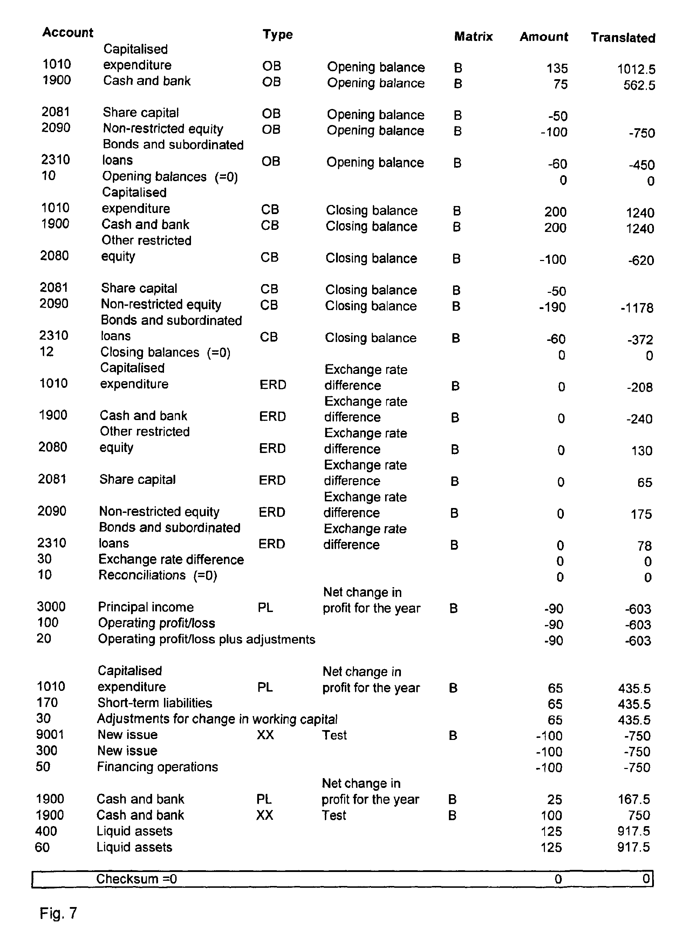

This flow matrix can be listed in the form of a cash flow analysis as shown in figure 7 as will be further described below.

The groupings for reconciliation come first in the accounts:
a) The opening balances add up to zero
b) The closing balances add up to zero
c) The exchange rate differences add up to zero and are thus eliminated from the cash flow.

After the reconciliation groups comes the cash flow and its headings. In this the changes in the accounts for shareholders' equity are masked out while changes in other accounts which affect the profit/loss for the year are included.

Each combination of account and change columns can be allocated to a discretionary group in the cash flow analysis. This is preferable done according to type of flow matrix.

The cash flow analysis will always balance to zero in the last row because of the invention's automatic controls.

The cash flow analysis includes the translated amounts in the "Translated" column. Amounts in local currency are only shown as information items and do not need to add up to zero.

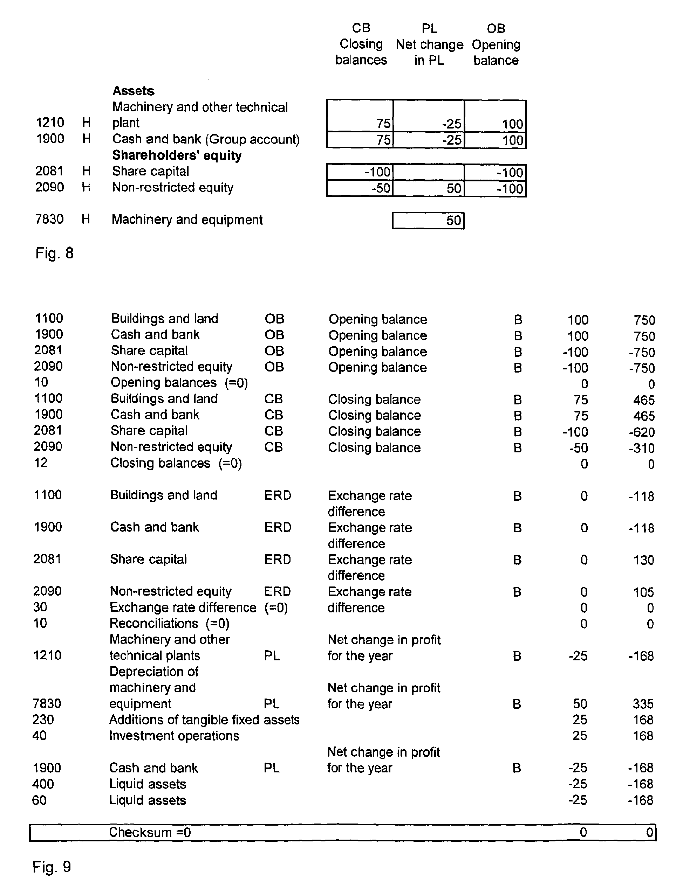

In order to explain the cash flow in more detail you can divide the change from OB to CB into one or more columns. Here we show two different ways of accounting for machinery and equipment. A depreciation of 50, an addition of 100 and a disposal of 75 has taken place during the year. At first only a net change of 25 is shown in the flow matrix depicted in figure 8.

The corresponding cash flow analysis is shown in figure 9.

The change in the profit and loss account - depreciation for the year of 50 - is assigned to the same group in the cash flow analysis as the change in the balance sheet account and then we see the net change of 25 (additions minus disposals) in the cash flow, recorded as additions of tangible fixed assets.

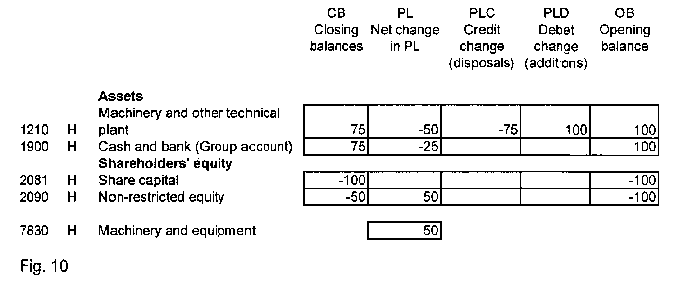

It is more powerful to divide the change into several columns as shown in figure 10.

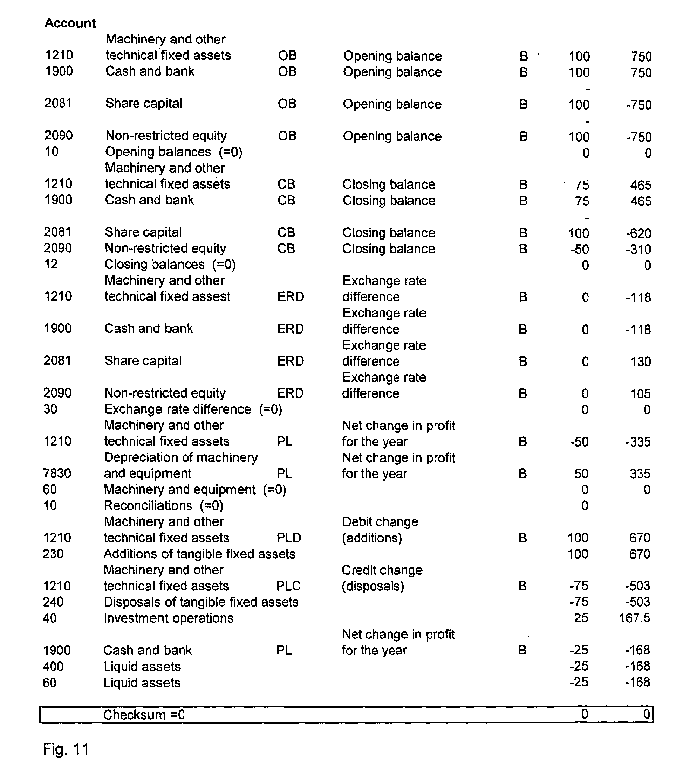

The cash flow now looks as shown in figure 11.

This provides a check that the depreciation in the profit and loss account is correct (0). The cash flow also records additions (670) and disposals (167.5) separately.

Similarly, all changes can be divided into different explanatory columns; e.g. changes in loans can be divided into repayments and new borrowing.

In this way, all groups of accounting entries (i.e. even eliminations) are accounted for in accordance with the above principles with a flow matrix.

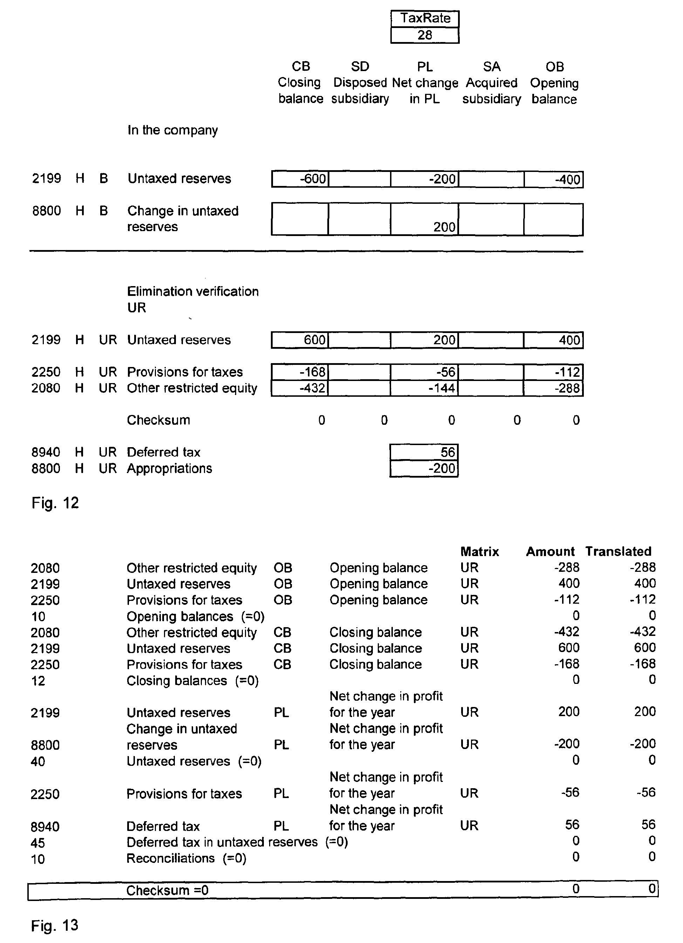

The principle for carrying out an intra-group elimination is illustrated in figure 12 with a flow matrix to eliminate untaxed reserves in a company.

The two upper rows - B - show information from the subsidiary's profit and loss account and balance sheet, which is automatically taken from the subsidiary's relevant flow matrix. These figures are only provided for information purposes.

The flow matrix for the elimination of untaxed reserves can be seen under the line - UR. The opening balances have been automatically transferred from the closing values of the corresponding flow matrix for the previous year, and in so doing the opening balances are eliminated from the balance sheet.

In the PL column the change for the year is eliminated, which is automatically eliminated in the consolidated accounts against restricted equity on the balance sheet, account 2080. The values are calculated automatically on the basis of the tax rate given at the top of the flow matrix.

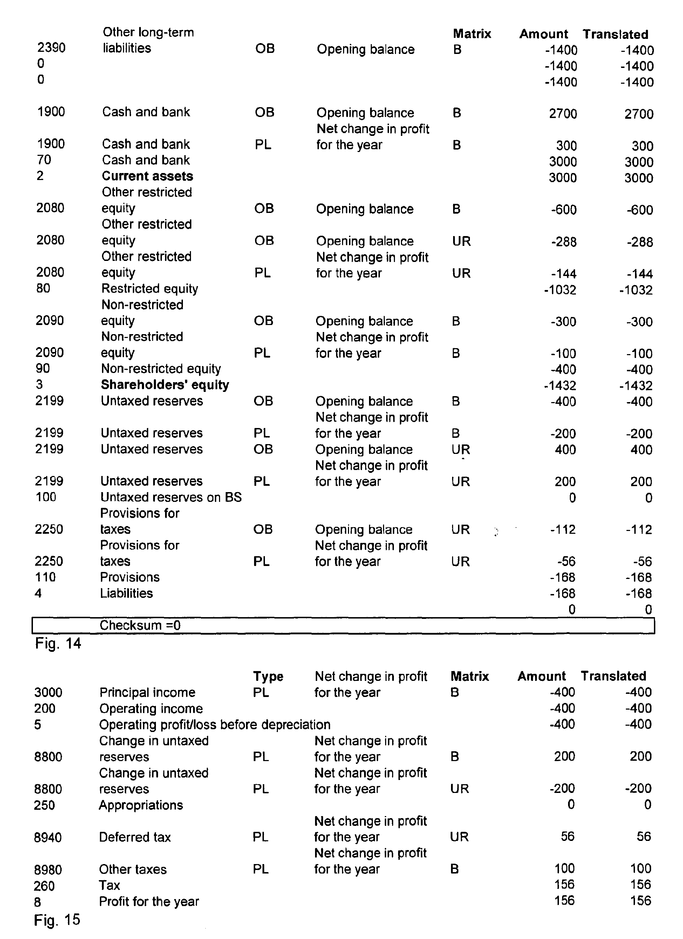

If the cash flow for this flow matrix is analysed, figure 13, one can see that the elimination of untaxed reserves does not affect cash flow, as indeed it should not.

On the balance sheet where the flow matrix for the company's data and the flow matrix for the elimination are combined you can see that the untaxed reserves balance to zero, figure 14.

The corresponding entries in the profit and loss account are also eliminated as is shown in figure 15.

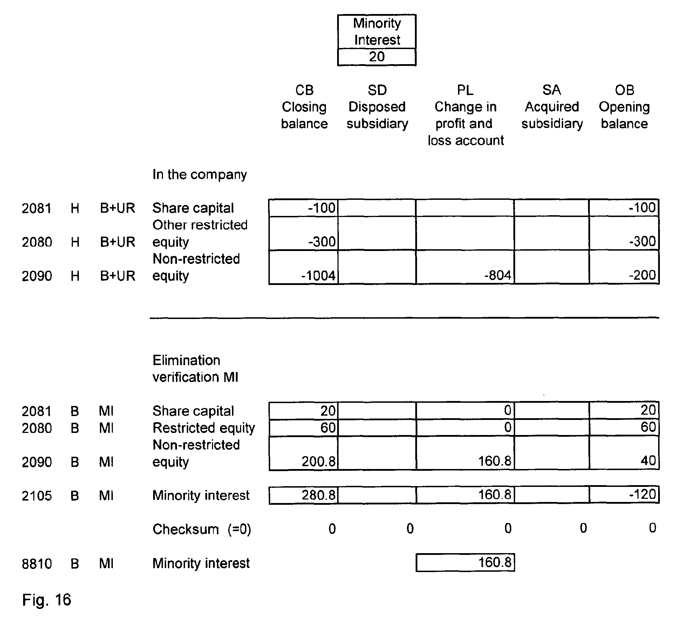

As a further example, the elimination of minority interests is shown in figure 16.

At the top we see shareholders' equity in the subsidiary after the elimination of untaxed reserves, the flow matrix B+UR. These figures are only provided for information.

Under the line there is the flow matrix for the elimination of minority interest. The opening balances have been automatically transferred from the closing balances of the previous year's flow matrix, and in so doing the opening balances are automatically eliminated from the balance sheet. In the PL column the change for the year is eliminated, which is then automatically eliminated in the consolidated accounts. The minority interest is calculated automatically on the basis of the minority share given at the top of the flow matrix.

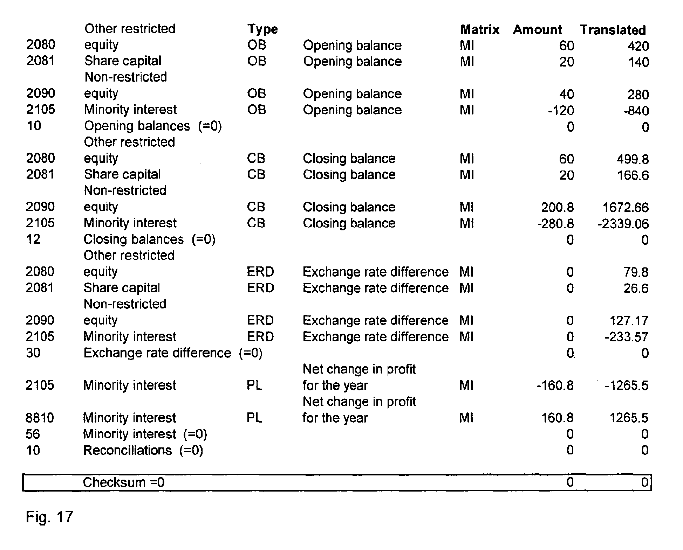

The analysis of the cash flow for this transaction report is shown in figure 17.

Since the subsidiary in this example is foreign, it is the amount in the "Translated" column that is used for the cash flow analysis. The elimination of minority interest must not affect liquidity, and it does not do so according to the analysis. Note that the exchange rate differences balance to zero which they will always do in all translated flow matrices.

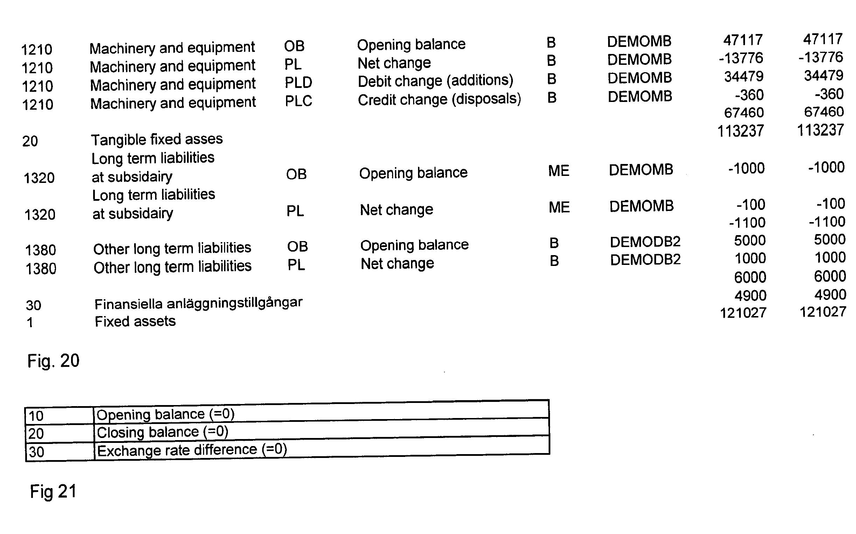

It is easy to analyse how different flow matrices affect the consolidated profit/loss, balance sheet and cash flow. It is also very easy to analyse how changes in the consolidated group affect the consolidated accounts. For each account in the consolidated accounts the balance in the form of a general ledger can be broken down into various types of flow matrix where the flow from OB to CB is accounted for and the CB values are masked out in the print-out, figure 20.

The method for providing the cash flow output will be described in greater detail with reference to figures 21 to 28. This is also the method for construing the general ledger for the parent company, or any other listing of the data, as will easily be understood by a man skilled in the art.

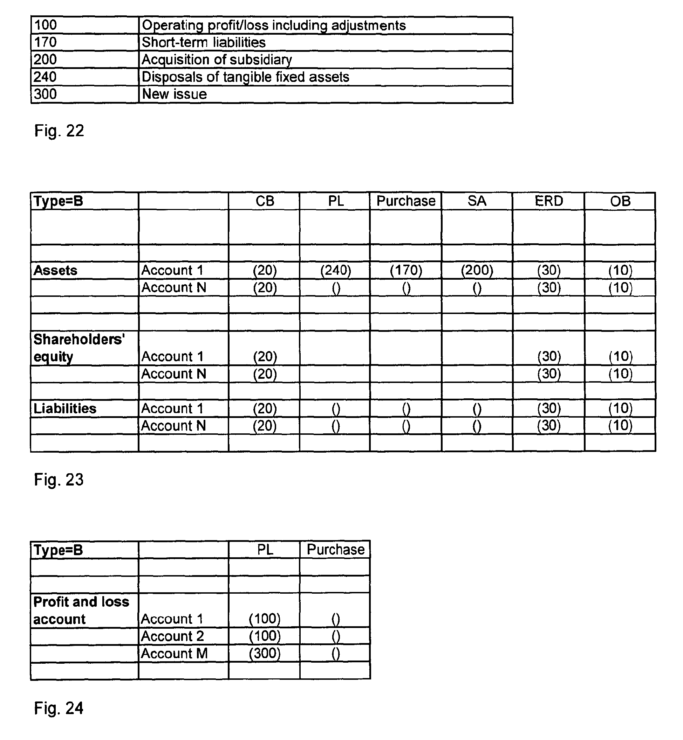

Firstly, the groupings required for the cash flow is registered in a table disclosed in figure 21 and 22. In figure 21 is shown the groupings that should balance to zero and in figure 22 is shown the groupings that constitute the actual cash flow. Obviously, many more grouping may be included if the user so wish.

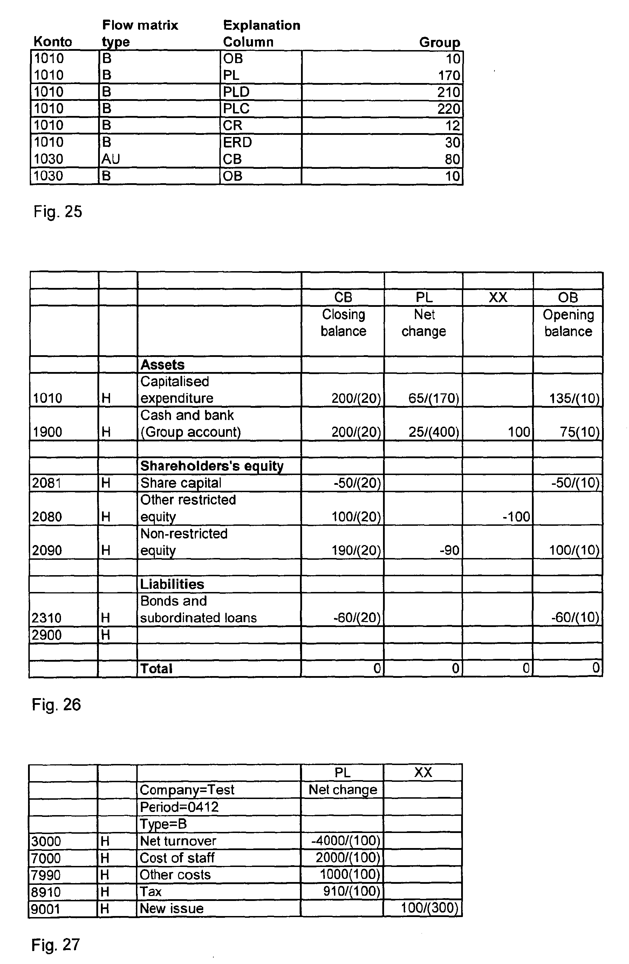

For each type of flow matrix, each cell, that is intersection between accounts, or rows, and columns may be assigned to a specific group as is shown in figure 23, for the balance sheet accounts and in figure 24 for the profit and loss accounts. These groupings are most preferably saved in a table as is shown in figure 25.

Changes in shareholders' equity is not grouped but are rather replaced by the groupings in the profit and loss account.

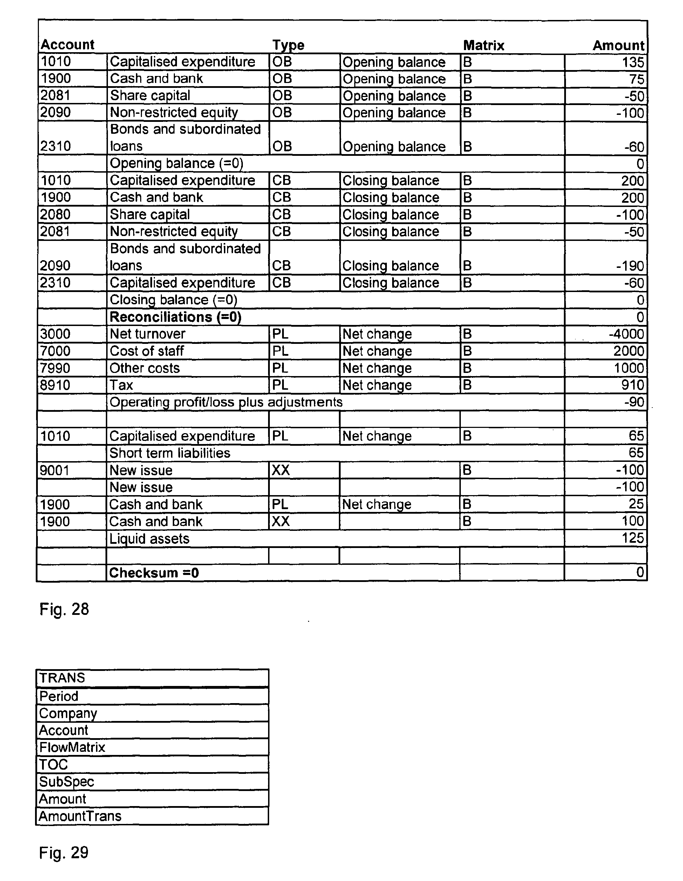

An example of a flow matrix is provided in figures 26 and 27 with the groupings noted within parentheses in the specific cells in the figures. The resulting cash flow output is shown in figure 28.

As is readily understood by the skilled man the general ledger for the parent company is provided by the same measures. Here the cange in shareholders' equity is not excluded.

Finally it should be understood that, even though the description above indicates that the preferred means for handling the different figures is a spreadsheet, which indeed is a suitable means, flow matrices may, alternatively or in some instances preferable, be stored in a database using a table for storing account entries, as is disclosed in figure 29 and as is readily understood by the man skilled in the art of spreadsheets and databases.

The fields in the table are shown in figure 29. The Period field comprises data relating to the accounting period. The company field preferable comprises a reference to a second table (not shown) including relevant data relating to the specific company. The Account filed comprise information relating to the specific account, but may also comprise a reference to a further table. The FlowMatrix field comprises an identification of the particular Flow Matrix, or grouping, for which the account entry is valid. The TOC filed comprises and identification of which type of change the specific entry relates to. This corresponds to a column in the flow matrix. The SubSpec field comprises an identification of the particular sub-specification, if any. Finally, the Amount field comprises the amount figure and AmountTrans field comprises the translated amount.

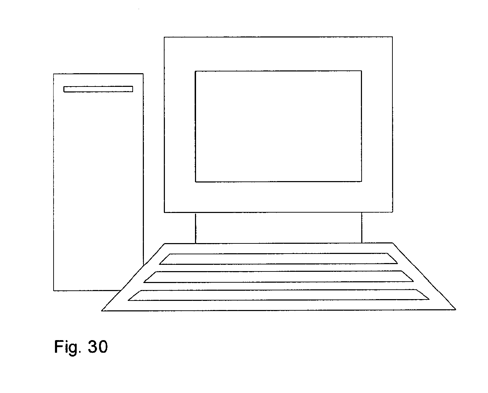

Figure 30 is a computer suitable for implementing different aspects of the present invention using suitable software including but not limited to any of: proprietor developed software, spreadsheets such as Microsoft Excel, databases such as Oracle, Microsoft Access, SQL databases, WEB based software, VPN (Virtual Private Network) based software etc. The computer in figure 30 also represents a means for implementing a system according to the present invention, the system being comprised of software to be executed on a suitable computer. According to different aspects of the invention the system according to the invention may alternatively be implemented on more than one computer connected through a computer network, or implemented on a central computer accessed through terminals. Said terminals may themselves be computers, preferable personal computers.

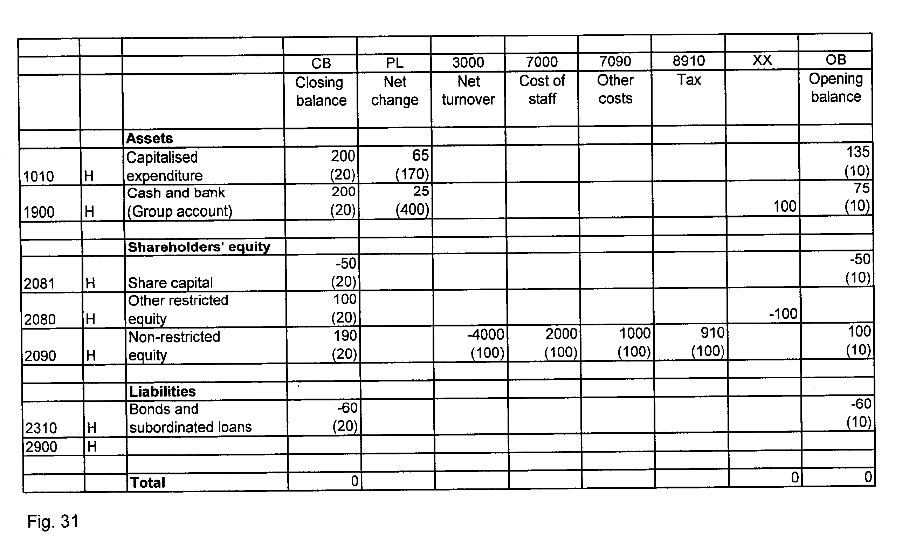

Figure 31 is a flow matrix according to one aspect of the present invention wherein the profit and loss account is included as extra explanatory columns incorporating a change in non-restricted equity. Compare figures 26 and 27. A separate profit and loss account is not present as is neither and income or expense accounts. In the listing of the cash flow analysis, or statement, groupings of the change in shareholder's equity must now be included.

### Sub-specifications of accounts.

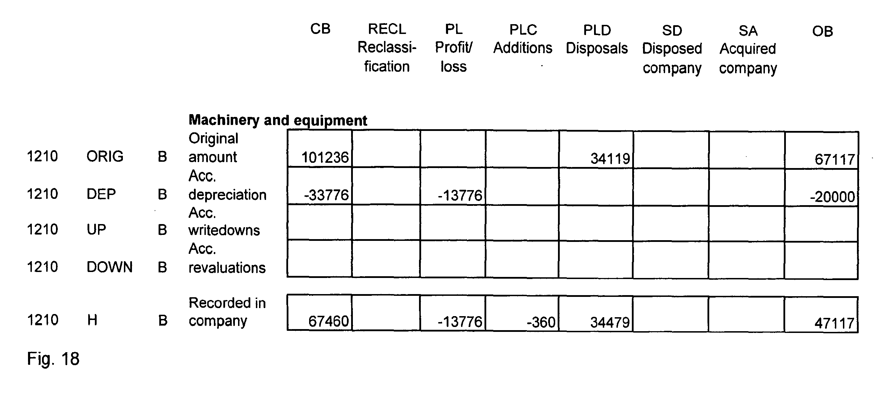

For each account it is possible to make further divisions of an account into sub-accounts. This is called sub-specification (SubSpecification). This can be used, for example, for a breakdown of fixed assets and is shown in figure 18.

Normal entry of data into an account is done at the principal level (sub-specification = H), i.e. for account 1210. This balance can be divided into various sub-accounts. In our example **ORIG** for original amount and **DEP** for accumulated depreciation. Other items can also occur, such as **UP** for revaluations and **DOWN** for writedowns.

The invention automatically checks that the records at the principal level agree with the total of those at the sub-levels (sub-specifications different to H).

All sub-specifications different to H are checked per account and flow matrix.
a) For each account of the type **B , EK , I** there is a check for each sub-specification that the opening balance plus changes corresponds to the closing balance.
b) That the sum of OB entries for sub-specifications different to H agrees with the OB entries for sub-specifications identical to H
c) That the sum of CB entries for sub-specifications different to H agrees with the CB entries for sub-specifications identical to H
d) For each individual exchange rate the sum of all changes for sub-specifications different to H shall agree with the sum of all changes for sub-specifications identical to H

If no data has been entered to any Sub specification for an account the above check is not performed for that account.

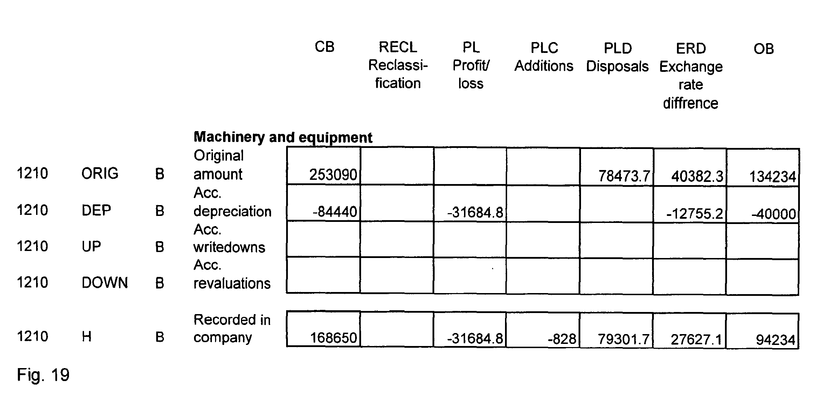

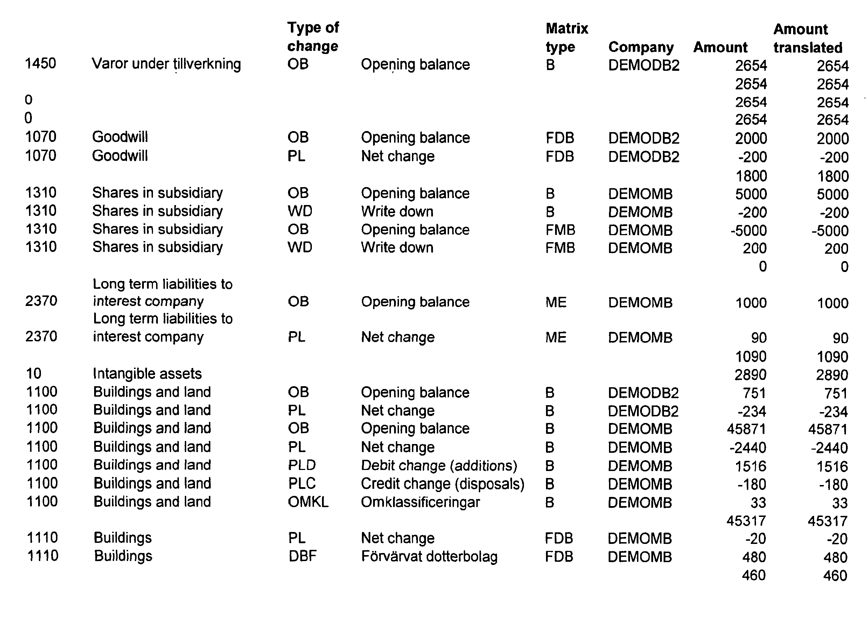

Currency translation takes place for each sub-specification and an exchange rate difference is calculated for each row in the sub-specification. The sum of the exchange rate differences in the sub-specifications will always agree with the exchange rate difference at the principal level (if the controls as above have not generated any errors). See figure 19.

In summary, a method for performing consolidated accounting or accounting reporting for a specific period in a group of companies comprising at least one parent company and at least one subsidiary is disclosed. The method comprises the steps of: - providing at least one flow matrix relating to a specific group of accounting entries for each of said at least one subsidiary, and
- adding said flow matrices to perform said consolidated accounting for said specific group of accounting entries and wherein said flow matrix comprises:
- a first row defining a first balance sheet account,
- at least a second row defining at least a second balance sheet account,
- a first column defining an opening balance for each of said at least one balance sheet account,
- a second column defining closing balance for each of said at least one balance sheet account and
- at least one further column defining a change in each of said at least one balance sheet account.

In an aspect of the invention the following step is included: - providing at least one flow matrix relating to a specific group of accounting entries for said at least one parent company, and in another aspect the flow matrices are provided from the at least one subsidiary to said at least one parent company.

In another embodiment the specific group of accounting entries is grouping of accounting entries for performing a specific consolidated accounting procedure.

In yet another embodiment each the flow matrices comprises further rows relating to further balance sheet accounts or income or expense accounts.

In another embodiment the further step of providing two or more rows for each account in each of said flow matrices to specify sub-accounts is included.

In still another embodiment each of said flow matrices comprises a first part including said first and at least second row, said first, second and at least one further column and that each of said flow matrices comprises a second part including a profit and loss account.

Yet another embodiment comprises the further step of automatically transferring figures in an closing balance column in a flow matrix for said company and group of accounting entries relating to a preceding accounting period to the opening balance column in said flow matrix for the current accounting period.

Still another embodiment comprises the step of providing means for a user to define further columns in said flow matrix.

In another embodiment the consolidated accounting for said parent company includes only accounting entries defined by a flow matrix from a subsidiary.

In another embodiment, the specific consolidated accounting procedure is selected from a group of consolidated accounting procedures including: changes for the accounting period in the balance sheet accounts and income and expense accounts for the individual companies, elimination of untaxed reserves, elimination of minority interests, elimination in the parent company of shares in subsidiaries, elimination of goodwill in subsidiaries, elimination of intercompany profits, elimination of equity, elimination of intercompany balances, or information items.

In another embodiment the step of automatically performing a check to verify that the closing balance is the sum of the opening balance and all of said at least one further column for each row in said flow matrix is included.

In yet another embodiment, the flow matrices for each subsidiary is provided in the local currency for said subsidiary.

Still another embodiment comprises the step of providing an exchange rate translation table relating individual currency exchange rates for a subsidiary to at least one column in said flow matrix for said subsidiary.

Still another embodiment comprises the step of providing individual currency exchange rates for opening balance, closing balance and said at least one further column for each subsidiary.

Still another embodiment comprises the step of automatically recalculating each of said flow matrices provided from each of said subsidiaries in local currency to the currency used by said parent company.

Still another embodiment comprises the step of providing said flow matrix with a exchange rate difference column, - recording in said exchange rate difference column any differences occurring from using different exchange rates for different columns in said flow matrices.

Still another embodiment comprises the step of providing a cash flow analysis based on said flow matrices.

Still another embodiment comprises the steps of providing a cash flow relation table relating at least some individual cells, i.e. intersections between columns and rows, in each of said flow matrices to a cash flow group, and - grouping and adding each cell belonging to a specific cash flow group in a cash flow analysis output.

Still another embodiment comprises the steps of providing a general ledger table relating at least some individual cells in said flow matrices to one of a number of general ledger groups, and - grouping and adding each cell belonging to a specific general ledger group in a general ledger output.

In yet another embodiment, all accounting entries which affect shareholders equity are booked against the account for shareholders equity both on the balance sheet and in the profit and loss account.

Still another embodiment comprises the steps of -checking if the balance sheet and the profit and loss account balances to zero, and/or - checking if the change in shareholders equity in the profit and loss account agrees with the change according to the balance sheet, and/or - checking that no income or expense account is booked in the columns for opening or closing balances, or in the column for exchange rate differences, - generating an alarm if any check fails.

It will be obvious that the invention may be varied in a plurality of ways. For instance may the data preferably be stored in a database communicating with a front end device providing means for input and data manipulation. Beneficially, each subsidiary is connected through a data communication device for providing the possibility to automatically report flow matrices to the consolidating accounting system. Such variations are not to be regarded as a departure from the scope of the invention. All such modifications as would be obvious to one skilled in the art are intended to be included within the scope of the appended claims.

## Claims

1. A system for performing consolidated accounting or reporting over a period of time in a group of companies comprising at least one parent company and one subsidiary, said system comprising:
- a data storage device for storing accounting entries relating to said companies in said group of companies,
- a data presentation and calculation device in communication with said data storage device, said data presentation and calculation is provided to retrieve and store data to and from said data storage device, to present data to a user of said system, and to perform calculations based on said data stored in said data storage device, **characterised in that**:
- said data presentation and calculation comprises flow matrices wherein each flow matrix comprises
- a first row defining a first balance sheet account,
- at least a second row defining at least a second balance sheet account,
- a first column defining an opening balance for each of said at least one balance sheet account,
- a second column defining closing balance for each of said at least one balance sheet account and
- at least one further column defining a change in each of said at least one balance sheet account.

2. The system as claimed in claim 1, wherein
- said system further comprises a consolidated accounting table at least comprising relations to an account, a flow matrix and an consolidated accounting group, and
- said data presentation and calculation device is provided to group and add all accounting entries relating to a specific general ledger group to provide a general ledger output.

3. The system as claimed in claim 1, wherein said data storage device comprises a database including at least one table comprising at least data fields relating to accounting period, company, account number, account entry group, type of change and amount.

4. The system as claimed in claim 3, wherein
- said data presentation and calculation device is provided to present the data stored in said amount field in a plurality of flow matrices, wherein
- For each record in said table in said database:
i) said account entry group data is used for determining which flow matrix said amount data is presented in,
ii) said account number data is used for determining which row in said flow matrix said amount data is presented in, and
iii) said type of change data is used for determining which column in said flow matrix said amount data is presented in.

5. A method for performing consolidated accounting or reporting over a period of time in a group of companies comprising at least one parent company and one subsidiary, comprising the steps of:
- storing accounting entries relating to said companies in said group of companies in a data storage device,
- retrieving and storing data to and from a data presentation and calculation device in communication with said data storage device,
- presenting data to a user using said data presentation and calculation device, and performing calculations based on said data stored in said data storage device, wherein
- said data storage device comprises a database including at least one table comprising at least data fields relating to accounting period, company, account number, account entry group, type of change and amount.

6. The method according to claim 5, comprising the steps of:
- presenting the data stored in said amount field in a plurality of flow matrices, wherein
- for each record in said table in said database:
i) said account entry group data is used for determining which flow matrix said amount data is presented in,
ii) said account number data is used for determining which row in said flow matrix said amount data is presented in, and
iii) said type of change data is used for determining which column in said flow matrix said amount data is presented in.

7. The method according to claim 6, comprising the step of:
- providing at least one flow matrix relating to a specific group of accounting entries for said at least one parent company.

8. The method according to claim 6, wherein said flow matrices are provided from said at least one subsidiary to said at least one parent company.

9. A computer program for performing the methods according to any of claims 5 to 8.

10. A computer program to be executed on a computer included in any of the systems according to any of claims 1 to 4, for performing software implemented parts of said system.
